Europäisches Patentamt

European Patent Office

Office européen des brevets

(19)

(11) Veröffentlichungsnummer : **0 046 839**
**B1**

(12) # EUROPÄISCHE PATENTSCHRIFT

(45) Veröffentlichungstag der Patentschrift :
26.09.84

(51) Int. Cl.³ : **B 32 B   5/18, B 60 R 13/02**

(21) Anmeldenummer : **81102323.3**

(22) Anmeldetag : **27.03.81**

(54) Innenraumverkleidung für Kraftfahrzeuge.

(30) Priorität : 30.08.80 DE 8023226 U
30.08.80 DE 8023225 U
30.08.80 DE 8023224 U

(43) Veröffentlichungstag der Anmeldung :
**10.03.82 Patentblatt 82/10**

(45) Bekanntmachung des Hinweises auf die Patenterteilung : **26.09.84 Patentblatt 84/39**

(84) Benannte Vertragsstaaten :
**BE FR GB IT LU NL SE**

(56) Entgegenhaltungen :
**DE-A- 1 694 194**
**DE-A- 1 704 514**
**DE-A- 2 259 862**
**DE-A- 2 513 705**

(73) Patentinhaber : **Firma Carl Freudenberg**
**Höhnerweg 2**
**D-6940 Weinheim/Bergstrasse (DE)**

(72) Erfinder : **Lohmar, Ernst, Dr.**
**Liegnitzerstrasse 57**
**D-6940 Weinheim (DE)**
Erfinder : **Kunkel, Hans-Achim**
**Panoramastrasse 2**
**D-6101 Reichelsheim (DE)**

(74) Vertreter : **Weissenfeld-Richters, Helga, Dr.**
**Höhnerweg 2**
**D-6940 Weinheim/Bergstrasse (DE)**

EP 0 046 839 B1

## Beschreibung

Die Erfindung betrifft eine Innenraumverkleidung für ein Kraftfahrzeug, bestehend aus einer Schaumstoffschicht aus geschlossenzellig geschäumtem, vernetztem Polypropylen mit einem Gehalt an Polyethylen, sowie einer darauf aufkaschierten Schicht mit tiefziehfähigen Eigenschaften. Auf eine solche Innenraumverkleidung nimmt die DE-A-1 704 514 Bezug. Sie läßt sich erhalten durch Versintern von Teilchen aus schaumförmigen Ethylen- und Polypropylen-Polymerisaten in Formen unter Druck, indem man die mit energiereichen Strahlen behandelten und bis zum Erschmelzen der Oberflächen erwärmten Teilchen in einer Form auf 5 bis 80 % des ursprünglichen Schüttvolumens zusammenpreßt.

Eine weitere Ausführung einer Innenraumverkleidung wird in dem Prospekt « Vernetzter Polyäthylen-Schaum », Bestell-Nr.: KL 43503 vom 1.10.1973 der Firma Bayerwerke AG, Leverkusen, Bundesrepublik Deutschland, beschrieben. Diese besteht aus einem geschlossenzellig geschäumten, vernetzten Polyethylen und kann nach einer vorausgegangenen Erwärmung auf eine Temperatur von 110 bis 140 °C durch Tiefziehen erhalten werden. Die mechanischen Eigenschaften entsprechen denjenigen bekannter Weichschäume, d. h. es ist nur eine sehr geringe Deformationsbeständigkeit gegeben, die durch die in einem Kraftfahrzeug auftretenden Temperaturen, beispielsweise durch die Einwirkung der Heizung oder der Sonneneinstrahlung eine weitere Beeinträchtigung erfahren kann. Die Anwendung derartiger Weichschäume für den angesprochenen Zweck erfordert daher zusätzliche Versteifungsmaßnahmen, die jedoch in vielen Fällen wirtschaftlich nicht tragbar sind.

Der Erfindung liegt die Aufgabe zugrunde, eine einfach herzustellende Innenraumverkleidung für ein Kraftfahrzeug zu entwickeln, die in speziellen Hinterschneidungen der Karosserie leicht verankerbar ist und die sich bei einer großen Deformationsbeständigkeit bis zu einer Temperatur von 120 °C durch schalldämpfende Eigenschaften und eine gute Steifigkeit auszeichnet.

Diese Aufgabe wird erfindungsgemäß dadurch gelöst, daß die Innenraumverkleidung eine Seitenwandverkleidung ist, daß die Schaumstoffschicht aus einem tiefgezogenen Bahnenzuschnitt besteht, der ein Raumgewicht von 5 bis 175 kg/m³ und einen Gehalt an Polyethylen von 10 bis 25 Gew.% aufweist und daß der Bahnenzuschnitt unter Verminderung seiner Wandstärke und unter gleichmäßigem Dichteübergang in Richtung zum Außenrand einen porenfreien verdichteten Einspannrand aufweist.

Falls die Innenraumverkleidung eine Hutablage ist, besteht die Schaumstoffschicht aus einem tiefgezogenen Bahnenzuschnitt, der ein Raumgewicht von 80 bis 200 kg/m³ und einen Gehalt an Polyethylen von 10 bis 25 Gew.% aufweist, wobei der Bahnenzuschnitt unter Verminderung seiner Wandstärke und unter gleichmäßigem Dichteübergang in Richtung zum Außenrand einen porenfrei verdichteten Einspannrand aufweist.

Falls die Innenraumverkleidung ein Autohimmel ist, besteht die Schaumstoffschicht aus einem tiefgezogenen Bahnenzuschnitt, der ein Raumgewicht von 30 bis 80 kg/m³ und einen Gehalt an Polyethylen von 10 bis 25 Gew.% aufweist, wobei der Bahnenzuschnitt unter Verminderung seiner Wandstärke und unter gleichmäßigem Dichteübergang in Richtung zum Außenrand einen porenfrei verdichteten Einspannrand aufweist.

Die Schaumstoffschicht besteht aus einem tiefgezogenen Bahnenzuschnitt des Polypropylenschaumes, wobei die Wandstärke in Richtung des Außenrandes gleichmäßig vermindert ist. Der Einspannrand selbst ist soweit verdichtet, daß das vernetzte Polypropylen in diesem Bereich vollkommen porenfrei ist. Der Einspannrand weist dadurch eine gegenüber dem porigen Schaumstoff erheblich gesteigerte Festigkeit auf, was die Verankerung der Innenraumverkleidung in speziell vorbereiteten Hinterschneidungen der Karosserie ermöglicht. Durch den gleichmäßigen Dichteübergang der Porenstruktur des Schaumstoffes in die porenfreie Randzone ergibt sich ein gleichmäßiger Festigkeitsübergang und ein dementsprechend hervorragender Abstützungseffekt. Die Innenraumverkleidung neigt dadurch auch im mittleren Bereich nicht zu Schwingungen. Durchgeführte Armaturen werden zusätzlich in ihrer Verankerung stabilisiert.

Bei der Verankerung der Innenraumverkleidung ausschließlich entlang der Randzone in speziellen Hinterschneidungen der Karosserie ergibt sich der sekundäre Vorteil, daß störend in den Innenraum vorspringende Ecken oder Kanten wegfallen können. Es ist ohne Schwierigkeiten möglich, einen vollkommen glattflächigen Übergang von der Innenseite der Innenraumverkleidung zu den angrenzenden Karosserieteilen zu ermöglichen.

Nach einer besonderen Ausgestaltung ist es vorgesehen, daß die Schaumstoffbahn Aussparungen und/oder Vertiefungen für die Anbringung von Armaturen enthält. Hierbei kann es sich beispielsweise um Sonnenblenden, Belüftungsdüsen, Lautsprecherboxen oder Aschenbecher handeln. Beschlagteile dieser Art können ohne weiteres vormontiert werden, was in arbeitstechnischer Hinsicht wesentlich einfacher realisierbar ist als im Anschluß an die Montage in einem Kraftfahrzeug.

Die guten schalldämpfenden Eigenschaften ergeben sich vor allem dadurch, daß das Polypropylen mit 10 bis 25 Gew.% Polyethylen versetzt ist. Hierunter ist zu verstehen, daß das Polypropylen und das Polyethylen gleichmäßig vermischt werden müssen, was beispielsweise in einem Extruder geschehen kann. Die so erhaltene Bahn wird durch die Einwirkung einer energiereichen Strahlung vernetzt und anschließend aufgeschäumt. Eine entsprechende Innenraumverkleidung kann auch unmittelbar auf Bestandteile der Karosserie aufgeklebt werden, beispielsweise auf die Innenseite des Daches, ohne daß Geräusche, die auf das Autodach einwirken, beispielsweise Regen oder Hagelschlag, in erheblichem Maße in den Innenraum übertragen werden. Die Dimensionsbeständigkeit entsprechender Teile ist bis zu einer Temperatur von 120 °C dennoch nahezu unverändert.

In der in der Anlage beigefügten Zeichnung wird Bezug genommen auf drei beispielhafte Ausführungen der erfindungsgemäßen Innenraumverkleidung. Es zeigen :

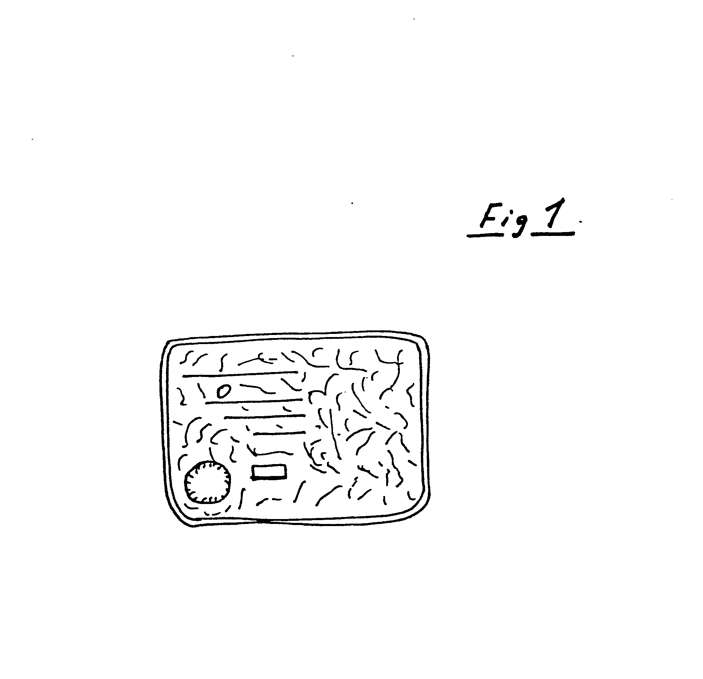

Figur 1 eine Ausführung in Gestalt einer Seitenwandverkleidung.

Figur 2 eine Ausführung in Gestalt einer Hutablage.

Figur 3 eine Ausführung in Gestalt eines Autohimmels.

Die dargestellte Seitenwandverkleidung ist für eine Tür bestimmt. Sie besteht aus einer tiefgezogenen Bahn aus einem geschlossenzellig geschäumten, vernetzten Copolymerisat aus Polypropylen und Polyethylen, bei dem der Polyethylengehalt 15 Gew.% des Polypropylens beträgt und das Raumgewicht 80 kg/m³. Die Dicke beträgt im mittleren Bereich 5 mm, im Bereich des Außenrandes 3 mm, wobei der Außenrand porenfrei gerundet ist und gleichmäßig an den Türrahmen anschließt. Die Innenwandverkleidung enthält mehrere Vertiefungen und Öffnungen zur Aufnahme nachträglich einzubringender Armaturen, wie beispielsweise eines Lautsprechers, einer Türinnentasche, des Türgriffes und der Fensterkurbel.

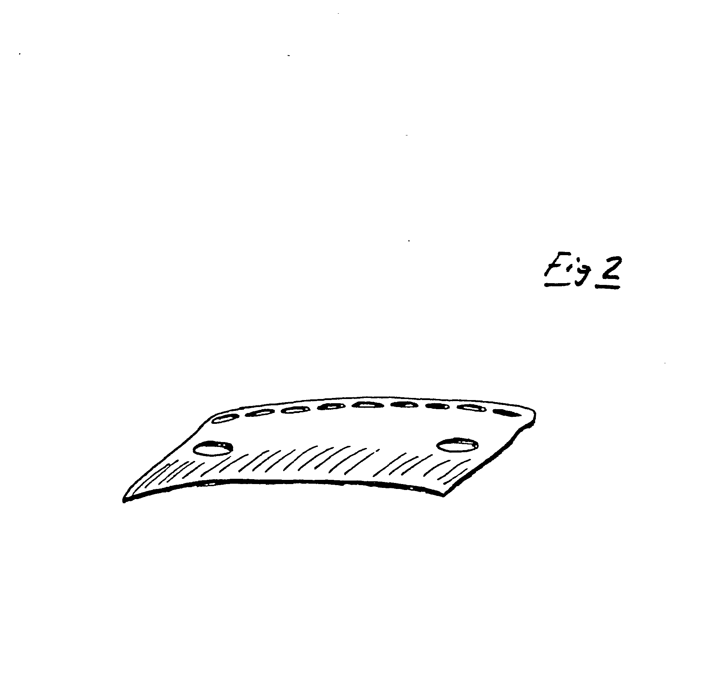

Die in Figur 2 dargestellte Hutablage besteht aus einer tiefgezogenen Schaumstoffschicht aus dem geschlossenzellig geschäumten, vernetztem Copolymerisat aus Beispiel 1. Das Raumgewicht beträgt ebenfalls 80 kg/m³. Die Dicke der Schaumstoffschicht beträgt im mittleren Bereich 10 mm, und sie ist im Bereich des porenfreien Einspannrandes verjüngt auf einen Wert von 6 mm. Die Montage kann auf einfache Weise durch Einschnappenlassen in entsprechende Aussparungen der Kraftfahrzeugkarosserie erfolgen. Durch ein entsprechendes Übermaß werden Klappergeräusche sicher vermieden. Im Bereich der seitlichen Begrenzungskanten sind zwei Vertiefungen vorgesehen, in die verdeckte Lautsprecher eingebaut werden können. Zwischen den beiden Vertiefungen ist eine weitere Aussparung vorgesehen, in die ein Behälter für die Aufnahme des Verbandkastens eingesetzt werden kann.

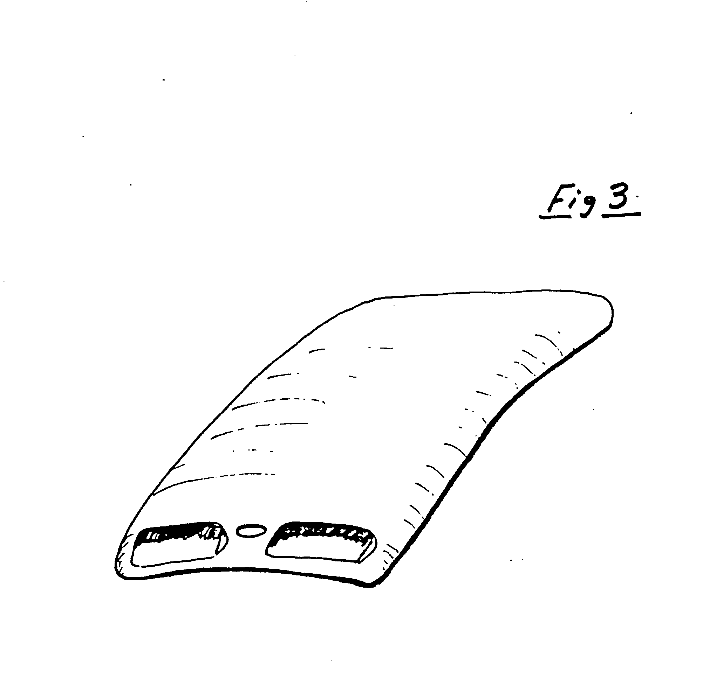

Der in Figur 3 dargestellte Autohimmel besteht aus einer Schaumstoffschicht in Form einer tiefgezogenen Kunststoffschale aus einem geschlossenzellig geschäumten, vernetzten Polypropylen mit einem Gehalt von 20 Gew.% Polyethylen und einem Raumgewicht von 60 kg/m³. Die Wandstärke beträgt im mittleren Bereich 8 bis 10 mm. Sie nimmt gleichmäßig in Richtung des porenfreien Einspannrandes ab auf einen Wert von 4 mm. Auf die Unterseite ist ein tiefziehfähiges, textiles Flächengebilde zur Verbesserung des Aussehens aufkaschiert, beispielsweise ein Gewebe oder ein Vliesstoff. Im vorderen Bereich weist der Autohimmel zwei nebeneinanderliegende, tiefgezogene Einwölbungen auf, die für die Aufnahme der nicht erkennbaren Sonnenblenden bestimmt sind. Zwischen beiden Einwölbungen ist eine Aussparung vorgesehen, in die eine Lampenfassung für die Innenbeleuchtung eingesetzt werden kann.

Der Autohimmel kann auf die Innenseite des Außendaches aufgeklebt werden. Geräusche, die auf das Autodach einwirken, z. B. Regen oder Hagelschlag, werden wirksam gemindert. Dennoch ist die Schaumstoffschicht noch so steif, daß eine automatische Montage und eine ausreichende Formbeständigkeit bis zu einer Temperatur von 120 °C gegeben ist.

## Ansprüche

1. Innenraumverkleidung für ein Kraftfahrzeug, bestehend aus einer Schaumstoffschicht aus geschlossenzellig geschäumtem, vernetztem Polypropylen mit einem Gehalt an Polyethylen sowie einer darauf aufkaschierten Schicht mit tiefziehfähigen Eigenschaften, dadurch gekennzeichnet, daß die Innenraumverkleidung eine Seitenwandverkleidung ist, daß die Schaumstoffschicht aus einem tiefgezogenen Bahnenzuschnitt besteht, der ein Raumgewicht von 5 bis 175 kg/m³ und einen Gehalt an Polyethylen von 10 bis 25 Gew.% aufweist, und daß der Bahnenzuschnitt unter Verminderung seiner Wandstärke und unter gleichmäßigem Dichteübergang in Richtung zum Außenrand einen porenfrei verdichteten Einspannrand aufweist.

2. Innenraumverkleidung für ein Kraftfahrzeug, bestehend aus einer Schaumstoffschicht aus geschlossenzellig geschäumtem, vernetztem Polypropylen mit einem Gehalt an Polyethylen sowie einer darauf aufkaschierten Schicht mit tiefziehfähigen Eigenschaften, dadurch gekennzeichnet, daß die Innenraumverkleidung eine Hutablage ist, daß die Schaumstoffschicht aus einem tiefgezogenen Bahnenzuschnitt besteht, der ein Raumgewicht von 80 bis 200 kg/m³ und einen Gehalt an Polyethylen von 10 bis 25 Gew.% aufweist, und daß der Bahnenzuschnitt unter Verminderung seiner Wandstärke und unter gleichmäßigem Dichteübergang in Richtung zum Außenrand einen porenfreien verdichteten Einspannrand aufweist.

3. Innenraumverkleidung für ein Kraftfahrzeug, bestehend aus einer Schaumstoffschicht aus geschlossenzellig geschäumtem, vernetztem Polypropylen mit einem Gehalt an Polyethylen sowie einer darauf aufkaschierten Schicht mit tiefziehfähigen Eigenschaften, dadurch gekennzeichnet, daß die Innenraumverkleidung ein Autohimmel ist, daß die Schaumstoffschicht aus einem tiefgezogenen Bahnenzuschnitt besteht, der ein Raumgewicht von 30 bis 80 kg/m$^3$ und einen Gehalt an Polyethylen von 10 bis 25 Gew.% aufweist, und daß der Bahnenzuschnitt unter Verminderung seiner Wandstärke und unter gleichmäßigem Dichteübergang in Richtung zum Außenrand einen porenfreien verdichteten Ein-Spannrand aufweist.

4. Innenraumverkleidung nach Anspruch 1 bis 3, dadurch gekennzeichnet, daß die aufkaschierte Schicht eine Folie aus einem Polyolefin ist, vorzugsweise eine ungereckte Polypropylenfolie.

5. Innenraumverkleidung nach Anspruch 1 bis 4, dadurch gekennzeichnet, daß die Schaumstoffschicht eine oder mehrere Aussparungen und/oder Vertiefungen für die nachträgliche Anbringung von Armaturen aufweist.

**Claims**

1. An interior space cladding for a motor vehicle, comprising a foam layer of closed-cell foamed crosslinked polypropylene containing some polyethylene and, laminated to this, a layer having thermoformable properties, characterised in that the interior space cladding is a side-panel cladding, that the foam layer consists of a thermoformed cut piece of sheet having a density of 5 to 175 kg/m$^3$ and a polyethylene content of 10 to 25 % by weight, and that the cut piece of sheet has a pore-free densified clamping edge of reduced wall thickness and with a uniform transition of density toward the outer edge.

2. An interior space cladding for a motor vehicle, comprising a foam layer of closed-cell foamed crosslinked polypropylene containing some polyethylene and, laminated to this, a layer having thermoformable properties, characterised in that the interior space cladding is a hat shelf, that the foam layer consists of a thermoformed cut piece of sheet having a density of 80 to 200 kg/m$^3$ and a polyethylene content of 10 to 25 % by weight, and that the cut piece of sheet has a pore-free densified clamping edge of reduced wall thickness and with a uniform transition of density toward the outer edge.

3. An interior space cladding for a motor vehicle, comprising a foam layer of closed-cell foamed crosslinked polypropylene containing some polyethylene and, laminated to this, a layer having thermoformable properties, characterised in that the interior space cladding is a car roof lining, that the foam layer consists of a thermoformed cut piece of sheet having a density of 30 to 80 kg/m$^3$ and a polyethylene content of 10 to 25 % by weight, and that the cut piece of sheet has a pore-free densified clamping edge of reduced wall thickness and with a uniform transition of density toward the outer edge.

4. An interior space cladding according to any of claims 1 to 3, characterised in that the layer laminated to the foam layer is a polyolefin film, preferably a non-stretched polypropylene film.

5. An interior space cladding according to any of claims 1 to 4, characterised in that the foam layer has one or more cut-outs and/or recesses for the subsequent mounting of fittings.

**Revendications**

1. Revêtement intérieur pour un véhicule automobile, ce revêtement étant constitué d'une couche de mousse de polypropylène réticulé à cellules fermées avec une teneur en polyéthylène, ainsi que d'une couche contre-collée sur cette couche et ayant des propriétés d'aptitude à l'emboutissage profond, caractérisé en ce que le revêtement intérieur est un revêtement de paroi latérale, la couche de mousse est constituée d'un tronçon de bande soumis à un emboutissage profond, ayant un poids spécifique de 5 à 175 kg/m$^3$ et contenant 10 à 25 % en poids de polyéthylène, ce tronçon de bande ayant un bord de fixation comprimé exempt de pores avec réduction de son épaisseur de paroi et une transition de densité uniforme en direction du bord extérieur.

2. Revêtement intérieur pour un véhicule automobile, ce revêtement étant constitué d'une couche de mousse de polypropylène réticulé à cellules fermées avec une teneur en polyéthylène, ainsi que d'une couche contre-collée sur cette couche et ayant des propriétés d'aptitude à l'emboutissage profond, caractérisé en ce que le revêtement intérieur est une plage formant chapeau, la couche de mousse est constituée d'un tronçon de bande soumis à un emboutissage profond, ayant un poids spécifique de 80 à 200 kg/m$^3$ et contenant 10 à 25 % en poids de polyéthylène, ce tronçon de bande ayant un bord de fixation comprimé exempt de pores avec réduction de son épaisseur de paroi et une transition uniforme de densité en direction du bord extérieur.

3. Revêtement intérieur pour un véhicule automobile, ce revêtement étant constitué d'une couche de mousse de polypropylène réticulé à cellules fermées avec une teneur en polyéthylène, ainsi que d'une couche contre-collée sur cette couche et ayant des propriétés d'aptitude à l'emboutissage profond, caractérisé en ce que le revêtement intérieur est un habillage de plafond, la couche de mousse est constituée d'un tronçon de bande soumis à un emboutissage profond, ayant un poids spécifique de 30 à 80 kg/m$^3$ et contenant 10 à 25 % en poids de polyéthylène, ce tronçon de bande comportant un bord de fixation comprimé exempt de pores avec réduction de son épaisseur de paroi et une transition uniforme de densité en direction du bord extérieur.

4. Revêtement intérieur suivant les revendications 1 à 3, caractérisé en ce que la couche contre-collée est une feuille d'une polyoléfine, de préférence, une feuille non étirée de polypropylène.

5. Revêtement intérieur suivant les revendications 1 à 4, caractérisé en ce que la couche de mousse comporte un ou plusieurs évidements et/ou cavités pour l'application ultérieure d'armatures.

Fig 1

Fig 2

Fig 3.